(19) Europäisches Patentamt
European Patent Office
Office européen des brevets

(11) **EP 4 484 485 A1**

(12) **EUROPEAN PATENT APPLICATION**

(43) Date of publication:
**01.01.2025 Bulletin 2025/01**

(21) Application number: **24184370.5**

(22) Date of filing: **25.06.2024**

(51) International Patent Classification (IPC):
***C08K 5/103*** *(2006.01)* ***C08L 23/00*** *(2006.01)*
***C08L 23/02*** *(2006.01)* ***C08L 23/06*** *(2006.01)*
***C08L 23/08*** *(2006.01)* ***B32B 27/18*** *(2006.01)*
***B32B 27/32*** *(2006.01)*

(52) Cooperative Patent Classification (CPC):
(C-Sets available)
**C08K 5/103; B32B 27/18; B32B 27/32;**
**C08L 23/00; C08L 23/02;** C08K 2201/014 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.06.2023 JP 2023104620**

(71) Applicant: **TAKEMOTO OIL & FAT CO., LTD.**
**Aichi 443-8611 (JP)**

(72) Inventors:
- **FURUTA, Koki**
  **Aichi, 443-8611 (JP)**
- **SATO, Shumma**
  **Aichi, 443-8611 (JP)**

(74) Representative: **Dennemeyer & Associates S.A.**
**Postfach 70 04 25**
**81304 München (DE)**

(54) **MODIFIER FOR POLYOLEFIN-BASED RESIN, POLYOLEFIN-BASED RESIN COMPOSITION, POLYOLEFIN-BASED RESIN FILM, AND LAMINATE FILM**

(57) Provided is a modifier for polyolefin-based resin, which includes a compound (A) represented by Formula (1) below; and a compound (B) represented by Formula (2) below;

[Compound (A)]

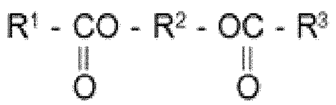

Formula (1)

where $R^1$ and $R^3$ are each a hydrocarbon group having 5 to 21 carbon atoms; and $R^2$ is a residue with all hydroxy groups removed from (poly)oxyalkylene glycol having 2 to 100 carbon atoms and having, in a molecule thereof, a (poly)oxyalkylene group composed of oxyalkylene units having 2 to 4 carbon atoms, and

[Compound (B)]

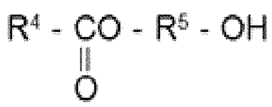

Formula (2)

where $R^4$ is a hydrocarbon group having 5 to 21 carbon atoms; and $R^5$ is a residue with all hydroxy groups removed from (poly)oxyalkylene glycol having 2 to 100 carbon atoms and having, in a molecule thereof, a (poly)oxyalkylene group composed of oxyalkylene units having 2 to 4 carbon atoms.

EP 4 484 485 A1

(52) Cooperative Patent Classification (CPC): (Cont.)

C-Sets
**C08K 5/103, C08L 23/00;**
**C08K 5/103, C08L 71/02;**
**C08L 23/02, C08L 71/02, C08K 3/105;**
**C08L 23/02, C08L 71/02, C08L 71/02;**
**C08L 23/02, C08L 71/02, C08L 71/02, C08K 3/105;**
**C08L 71/02, C08L 71/02;**
**C08L 71/02, C08L 71/02, C08K 5/103**

## Description

BACKGROUND

1. Technical Field

The present disclosure relates to a modifier for polyolefin-based resin, a polyolefin-based resin composition, a polyolefin-based resin film, and a laminate film.

2. Related Art

Films composed of a polyolefin-based resin have been widely used as food packaging films. Polyolefin-based resins are, however, hydrophobic. Consequently, the moisture evaporating from the food is deposited onto the inner surface of a film to form fine waterdrops. As a result, there arises a disadvantage that the film is fogged. Thus, various films are proposed that have antifogging properties given by a modifier blended in order to prevent the films from fogging.

For example, JP-A-2007-45855 discloses a film containing: an antifogging agent which includes (A) a fatty acid ester of trivalent or higher polyhydric alcohol, (B) a polyoxyethylene alkyl ether, and (C) a polyalkylene glycol fatty acid ester; and a polyolefin-based resin.

JP-A-2002-20555 discloses a film containing: a linear low-density polyethylene resin; (A) an ester obtained from polyglycerin and a fatty acid, (B) an ethylene oxide adduct of a fatty acid, and optionally (C) an ethylene oxide adduct of an ester obtained from sorbitan and a fatty acid. JP-A-2002-20555 also achieves high stability during formation of the film by mixing each component in the film in a predetermined ratio.

Such a modifier is transported and stored in a form of masterbatch containing a highly concentrated modifier. Thus, in the manufacture of the film, the masterbatch is generally mixed with a resin to form the film. The masterbatch containing a high concentration of a conventional modifier, however, may cause problems, such as vent flow, during the manufacture. In other cases, a modifier that has bled out during storage may cause blocking of the masterbatch, which can lead to problems with handling of the masterbatch.

Accordingly, an embodiment of the present disclosure provides a modifier for polyolefin-based resin that can give excellent antifogging properties and manufacturability to polyolefin-based resin films, enhance the masterbatch manufacturability, and additionally, suppress blocking of the masterbatches. Such an embodiment of the present disclosure can also provide a polyolefin-based resin composition, a polyolefin-based resin film, and a laminate film that contain such a modifier.

SUMMARY

A modifier for polyolefin-based resin according to an embodiment of the present disclosure includes a compound (A) represented by Formula (1) below; and a compound (B) represented by Formula (2) below;

[Compound (A)]

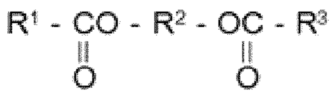

Formula (1)

in which $R^1$ and $R^3$ are each a hydrocarbon group having 5 to 21 carbon atoms; and $R^2$ is a residue with all hydroxy groups removed from (poly)oxyalkylene glycol having 2 to 100 carbon atoms and having, in a molecule thereof, a (poly)oxyalkylene group composed of oxyalkylene units having 2 to 4 carbon atoms, and

[Compound (B)]

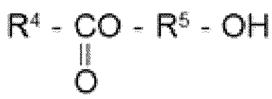

Formula (2)

in which $R^4$ is a hydrocarbon group having 5 to 21 carbon atoms; and $R^5$ is a residue with all hydroxy groups removed from (poly)oxyalkylene glycol having 2 to 100 carbon atoms and having, in a molecule thereof, a (poly)oxyalkylene group composed of oxyalkylene units having 2 to 4 carbon atoms.

## DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

Embodiments of the present disclosure to solve the above problems relate to a modifier for polyolefin-based resin, a polyolefin-based resin composition, polyolefin-based resin film, and a laminate film.

[1] A modifier for polyolefin-based resin including a compound (A) represented by Formula (1) below; and a compound (B) represented by Formula (2) below;

[Compound (A)]

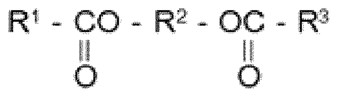

Formula (1)

where $R^1$ and $R^3$ are each a hydrocarbon group having 5 to 21 carbon atoms; and $R^2$ is a residue with all hydroxy groups removed from (poly)oxyalkylene glycol having 2 to 100 carbon atoms and having, in a molecule thereof, a (poly)oxyalkylene group composed of oxyalkylene units having 2 to 4 carbon atoms, and

[Compound (B)]

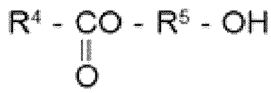

Formula (2)

where $R^4$ is a hydrocarbon group having 5 to 21 carbon atoms; and $R^5$ is a residue with all hydroxy groups removed from (poly)oxyalkylene glycol having 2 to 100 carbon atoms and having, in a molecule thereof, a (poly)oxyalkylene group composed of oxyalkylene units having 2 to 4 carbon atoms.

[2] The modifier for polyolefin-based resin according to [1], in which $R^1$, $R^3$, and $R^4$ are each a hydrocarbon group having 7 to 17 carbon atoms.

[3] The modifier for polyolefin-based resin according to [1], in which $R^2$ and $R^5$ are each a residue with all hydroxy groups removed from polyoxyalkylene glycol having 4 to 50 carbon atoms and having, in a molecule thereof, a polyoxyalkylene group including oxyalkylene units having 2 carbon atoms.

[4] The modifier for polyolefin-based resin according to [1], in which the compound (A) is contained in an amount of 20 to 80 parts by mass, and the compound (B) is contained in an amount of 20 to 80 parts by mass when a total mass of the compound (A) and the compound (B) is 100 parts by mass.

[5] The modifier for polyolefin-based resin according to [1], further containing a nonionic surfactant (C).

[6] The modifier for polyolefin-based resin according to [5], in which the nonionic surfactant (C) is a partial ester of a trivalent to hexavalent polyol and an aliphatic carboxylic acid having 6 to 22 carbon atoms.

[7] The modifier for polyolefin-based resin according to [5], in which the nonionic surfactant (C) is contained in an amount of 20 to 400 parts by mass when a total mass of the compound (A) and the compound (B) is 100 parts by mass.

[8] A polyolefin-based resin composition containing a polyolefin-based resin, and the modifier for polyolefin-based resin according to any one of [1] to [7].

[9] A polyolefin-based resin film containing the polyolefin-based resin composition according to [8].

[10] A laminate film including two or more laminated layers, in which at least one outermost layer of the two or more laminated layers includes the polyolefin-based resin film according to [9].

In the present disclosure, a numeric range indicated by "Y to Z" means a range including an upper limit value and a lower limit value. In other words, "Y to Z" means "Y or more and Z or less."

Modifier for Polyolefin-Based Resin

A modifier for polyolefin-based resin (hereinafter also referred to as "modifier") contains a compound (A) represented by General Formula (1) below and a compound (B) represented by General Formula (2) below; and furthermore, the modifier preferably contains a nonionic surfactant (C):

[Compound (A)]

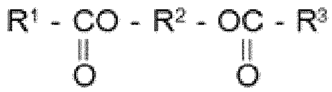

Formula (1)

where $R^1$ and $R^3$ are each a hydrocarbon group having 5 to 21 carbon atoms; and $R^2$ is a residue with all hydroxy groups removed from (poly)oxyalkylene glycol having 2 to 100 carbon atoms and having, in a molecule thereof, a (poly)oxyalkylene group composed of oxyalkylene units having 2 to 4 carbon atoms, and

[Compound (B)]

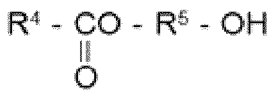

Formula (2)

where $R^4$ is a hydrocarbon group having 5 to 21 carbon atoms; and $R^5$ is a residue with all the hydroxy groups removed from (poly)oxyalkylene glycol having 2 to 100 carbon atoms and having, in a molecule thereof, a (poly)oxyalkylene group composed of oxyalkylene units having 2 to 4 carbon atoms.

Compound (A)

The compound (A) is a diester represented by General Formula (1) above. Examples of the compound (A) include 1) an ester of an alkylene oxide having 2 to 4 carbon atoms added to an aliphatic carboxylic acid having 6 to 22 carbon atoms and an aliphatic carboxylic acid having 6 to 22 carbon atoms, and 2) a diester of an aliphatic carboxylic acid having 6 to 22 carbon atoms and (poly)oxyalkylene glycol having a (poly)oxyalkylene group composed of oxyalkylene units having 2 to 4 carbon atoms. One compound (A) can be used alone. Alternatively, two or more compounds (A) may be used in combination.

The hydrocarbon group of the aliphatic carboxylic group having 6 to 22 carbon atoms as a raw material of the compound (A) may be either a saturated hydrocarbon group or an unsaturated hydrocarbon group. Further, the hydrocarbon group may also have a linear structure, a branched structure, or a cyclic structure. Examples of such an aliphatic carboxylic acid include caproic acid, sorbic acid, enanthic acid, caprylic acid, pelargonic acid, capric acid, undecylic acid, undecylenic acid, lauric acid, tridecylic acid, myristic acid, pentadecylic acid, palmitic acid, margaric acid, stearic acid, isostearic acid, arachidic acid, heneicosylic acid, docosanoic acid, oleic acid, linolic acid, linolenic acid, erucic acid, 12-hydroxystearic acid, and ricinoleic acid. As the two aliphatic carboxylic acids having 6 to 22 carbon atoms, which are the raw materials of the compound (A), the same aliphatic carboxylic acid can be used. Alternatively, aliphatic carboxylic acids different from each other may be used.

Examples of the alkylene oxide having 2 to 4 carbon atoms include ethylene oxides, propylene oxides, and 1,2-butylene oxides. When two or more alkylene oxides are used, examples of the form of the alkylene oxides added to the aliphatic carboxylic acid having 6 to 22 carbon atoms include random copolymerization, block copolymerization, and random block copolymerization. The molar number of the alkylene oxide added to 1 mole of the aliphatic carboxylic acid having 6 to 22 carbon atoms is determined such that the total number of carbon atoms in the alkylene oxide ranges from 2 to 100.

Examples of the (poly)oxyalkylene glycol having a (poly)oxyalkylene group composed of oxyalkylene units having 2 to 4 carbon atoms include ethylene glycols, propylene glycols, polyethylene glycols, polypropylene glycols,

polybutylene glycols, and polyethylene glycol-polypropylene glycol block polymers. The amount of the (poly)oxyalkylene glycol used per mole of the aliphatic carboxylic acid having 6 to 22 carbon atoms is determined such that the total number of carbon atoms in the (poly)oxyalkylene glycol ranges from 2 to 100.

Compound (B)

The compound (B) is a monoester represented by General Formula (2) above. Examples of the compound (B) include a monoester of an aliphatic carboxylic acid having 6 to 22 carbon atoms and (poly)oxyalkylene glycol having a (poly)oxyalkylene group composed of oxyalkylene units having 2 to 4 carbon atoms. One compound (B) can be used alone. Alternatively, two or more compounds (B) may be used in combination.

As raw materials of the compound (B), which are an aliphatic carboxylic acid having 6 to 22 carbon atoms, an alkylene oxide having 2 to 4 carbon atoms, and (poly)oxyalkylene glycol having a (poly)oxyalkylene group composed of oxyalkylene units having 2 to 4 carbon atoms, a compound containing the same raw materials as those of the compound (A) can be used.

Note that $R^1$ and $R^3$ of the compound (A) and $R^4$ of the compound (B) are each preferably a hydrocarbon group having 7 to 17 carbon atoms. $R^2$ of the compound (A) and $R^5$ of the compound (B) are each preferably a residue with all the hydroxy groups removed from the polyoxyalkylene glycol having 4 to 50 carbon atoms and having, in a molecule thereof, a polyoxyalkylene group including oxyalkylene units having 2 carbon atoms. Further preferably, $R^2$ of the compound (A) and $R^5$ of the compound (B) are each a residue with all the hydroxy groups removed from the polyoxyalkylene glycol having 4 to 30 carbon atoms and having, in a molecule thereof, a polyoxyalkylene group including oxyalkylene units having 2 carbon atoms.

Nonionic Surfactant (C)

As for the nonionic surfactant (C), a conventionally known compound other than the compound (A) and the compound (B) can be used. One nonionic surfactant (C) can be used alone. Alternatively, two or more nonionic surfactants (C) may be used in combination. Preferred examples of the nonionic surfactant (C) include a partial ester of a trivalent to hexavalent polyol and an aliphatic carboxylic acid having 6 to 22 carbon atoms.

Examples of the trivalent to hexavalent polyol include 1) polyhydric alcohols including glycerin, pentaerythritol, sorbitol, and glucose, 2) cyclic ether polyhydric alcohols obtained by dehydration of sorbitol, such as sorbitan or sorbide, 3) (poly)ether tetraols including diglycerin and ethylene glycol diglyceryl ether, 4) (poly)ether pentols including triglycerin and trimethylolpropane diglyceryl ether, and 5) (poly)ether hexols including tetraglycerin and dipentaerythritol. Meanwhile, as for the aliphatic carboxylic acid having 6 to 22 carbon atoms, the aliphatic carboxylic acid having 6 to 22 carbon atoms, which is the same as the raw material of the compound (A), can be used.

Content Ratio

The modifier can contain the compound (A) and the compound (B) in a desired ratio. When the total mass of the compound (A) and the compound (B) in the modifier is 100 parts by mass, 5 to 95 parts by mass of the compound (A) and 5 to 95 parts by mass of the compound (B) are preferably contained. More preferably, 20 to 80 parts by mass of the compound (A) and 20 to 80 parts by mass of the compound (B) are contained. Further preferably, 30 to 70 parts by mass of the compound (A) and 30 to 70 parts by mass of the compound (B) are contained.

When the modifier contains the nonionic surfactant (C), the contents of the compound (A), the compound (B), and the nonionic surfactant (C) can also be determined in a desired ratio. Note that when the total mass of the compound (A) and the compound (B) in the modifier is 100 parts by mass, preferably 10 to 500 parts by mass, more preferably 20 to 400 parts by mass, further preferably 20 to 200 parts by mass of the nonionic surfactant (C) is contained.

Polyolefin-Based Resin Composition

A polyolefin-based resin composition (hereinafter also referred to as "resin composition") contains a modifier and a polyolefin-based resin. Note that the resin composition also encompasses masterbatches and molded products of resin compositions including polyolefin-based resin films.

Polyolefin-Based Resin

Examples of the polyolefin-based resin include 1) $\alpha$-olefin homopolymers including polyethylene and polypropylene that are obtained from one $\alpha$-olefin having 2 to 8 carbon atoms such as ethylene, propylene, 1-butene, 1-hexene, 4-methyl-1-pentene, or 1-octene; 2) $\alpha$-olefin copolymers including ethylene-propylene copolymers, ethylene-1-butene

copolymers, and ethylene-1-hexene copolymers that are obtained from two or more $\alpha$-olefins having 2 to 8 carbon atoms; 3) copolymers obtained from ethylene and vinyl acetates; 4) ethylene-vinyl alcohol copolymers obtained by saponification of copolymers obtained from ethylene and vinyl acetate; 5) ethylene-acrylic acid copolymers obtained from ethylene and at least one selected from acrylic acids, methyl acrylates, and ethyl acrylates; and 6) ethylene-methacrylic acid copolymers composed of ethylene and at least one selected from methacrylic acids, and methyl methacrylates. One polyolefin-based resin can be used alone. Alternatively, two or more polyolefin-based resins may be used in combination.

Content Ratio

The content ratio of the modifier and the polyolefin-based resin in the resin composition is not particularly limited. The content ratio can be appropriately set depending on an aspect of the resin composition. Generally, the resin composition preferably contains 0.1 to 30 parts by mass of the modifier when the total mass of the modifier and the polyolefin-based resin is 100 parts by mass. Note that when the resin composition is a masterbatch, the resin composition contains the modifier in an amount of preferably 2.5 to 25 parts by mass, further preferably 5 to 20 parts by mass based on the total mass of 100 parts by mass of the modifier and the polyolefin-based resin.

Method of Manufacturing Resin Composition

The resin composition is not particularly limited. The resin composition can be manufactured by a known method. When the resin composition is a masterbatch, examples of the manufacturing method thereof include the following methods (1), (2), (3), and (4):

(1) a mixture of the polyolefin-based resin and the modifier that have been premixed with a mixer such as a tumbler blender, a super mixer, or a Henschel mixer, is melt-kneaded and granulated with an extruder, such as a monoaxial extruder or a multiaxial extruder;
(2) the polyolefin-based resin melted with an extruder, such as a monoaxial extruder or a multiaxial extruder, and the modifier charged by side feeding or fluid injection are mixed, melt-kneaded and granulated;
(3) the polyolefin-based resin and the modifier supplied to an extruder, such as a monoaxial extruder or a multiaxial extruder, with a feeder are melted, kneaded and pelletized; and
(4) the polyolefin-based resin supplied to an extruder, such as a monoaxial extruder or a multiaxial extruder, with a feeder, and the modifier charged by side feeding or fluid injection are supplied to the extruder, and then melt-kneaded and granulated.

The grains of the obtained resin composition are then melt-kneaded together with the polyolefin-based resin by any of the methods (2) to (4). Accordingly, it is possible to obtain a resin composition for molding containing the polyolefin-based resin and the modifier in the same content ratio as a polyolefin-based resin film, which will be described below. The melted resin composition for molding under molten state may be subjected to a method of molding a resin film, which will be described below. The resin composition for molding may be manufactured through directly mixing of the modifier with the polyolefin-based resin without undergoing the stage of a masterbatch.

As described above, examples of methods of mixing the polyolefin-based resin, the compound (A), the compound (B), and the nonionic surfactant (C) as raw materials include mixing with a mixer, such as a tumbler blender, a super mixer or a Henschel mixer, side feeding, and fluid injection. Which one of these methods to be employed can be determined depending on the states of the polyolefin-based resin, the compound (A), the compound (B), and the nonionic surfactant (C). When the raw materials are in a solid form, the mixing with a mixer, such as a tumbler mixer, a super mixer or a Henschel mixer, or the side feeding is employed. When the raw materials are in a liquid form, the fluid injection or the mixing with a super mixer or a Henschel mixer is employed. After the raw materials in a solid form being dissolved or dispersed in raw materials in a liquid form, raw materials in a liquid or fluid form may be mixed as a whole.

Polyolefin-Based Resin Film

The polyolefin-based resin film (hereinafter also referred to as "resin film") contains a resin composition, i.e. the polyolefin-based resin and the modifier. The content ratios of the modifier and the polyolefin-based resin in the resin film are not particularly limited. When the total mass of the modifier and the polyolefin-based resin is 100 parts by mass, the modifier is contained in an amount of preferably 0.1 to 5 parts by mass, more preferably 0.25 to 3.0 parts by mass. Further preferably, when the film is a single-layered resin film, the modifier is contained in an amount of 0.25 to 1.0 parts by mass based on the total mass of 100 parts by mass of the modifier and the polyolefin-based resin. Still further preferably, when the film is a laminate film, which will be described below, the modifier is contained in an amount of 1.25 to 3.0 parts by mass in the resin film based on the total mass of 100 parts by mass of the modifier and the polyolefin-based resin.

Method of Forming Resin Film

The resin film can be manufactured by forming a resin composition for molding containing the polyolefin-based resin and the modifier in a predetermined ratio through a known method of molding. Examples of the method of molding the resin film include inflation molding including air-cooling inflation molding, two-stage air-cooling inflation molding, three-stage air-cooling inflation molding, and water-cooling inflation molding; T-die molding using a straight manifold type T-die, a coat hanger type T-die, or a combination of these T-dies; calender molding; and press molding. Either an unstretched resin film or a stretched resin film can be used. Examples of a method of stretching a resin film include a successive biaxial stretching method, a simultaneous biaxial stretching method, and a tubular biaxial stretching method. Note that the problems to be solved by the present embodiment is to enhance masterbatch manufacturability and suppress blocking of masterbatchs. The resin film according to the present embodiment also encompasses films manufactured from the modifier and the polyolefin-based resin without undergoing the stage of a masterbatch. This is also the case with the laminate film, which will be described below.

Additive

The modifier, the resin composition, the resin film, and the laminate film may purposefully contain other additives. Examples of the additive include heat stabilizers, antioxidants, neutralizers, lubricants, weathering agents, ultraviolet absorbers, and antiblocking agents.

Laminate Film

The laminate film has a laminated structure including two or more layers. At least one outermost layer of these laminated layers contains the resin film according to the present embodiment. The layer(s) other than the layer containing the resin film are manufactured from, for example, a thermoplastic resin, an adhesive agent, an anchor coating agent, an adhesive resin, or a metal, such as aluminum. Examples of the thermoplastic resin include polyolefin-based resins, polyesters such as polyethylene terephthalate, polyamides such as Nylon 6, polyvinyl alcohol, polystyrene, and acrylic resins such as polymethylmethacrylate. The thermoplastic resin may purposefully contain additives. Examples of the additives include heat stabilizers, antioxidants, neutralizers, lubricants, weathering agents, ultraviolet absorbers, antiblocking agents, antistatic agents, and antifogging agents.

The laminate film can be manufactured by a known method. Examples of the method of manufacturing the laminate film include a dry lamination method, a sand lamination method, an extrusion lamination method, and a coextrusion method. When the laminate film is manufactured by the dry lamination method, the sand lamination method, or the extrusion lamination method, for example, a polyurethane-based adhesive agent, an organic titanium-based anchor coating agent, an isocyanate-based anchor coating agent, or an adhesive resin can be used that is known. As for the coextrusion method, for example, inflation molding or T-die molding can be used. Either an unstretched molding method or a stretched molding method may be used.

The resin film and the laminate film according to the present embodiment are preferably used in food packaging, however, the application thereof is not particularly limited. The film thicknesses of the resin film and the laminate film are not particularly limited, either. Depending on the application thereof, the film thickness of the film can be appropriately determined.

The modifier according to the present embodiment contains the compound (A) and the compound (B). High antifogging properties can be thereby given to the polyolefin-based resin film. In conjunction therewith, a variation in extrusion during manufacturing of the film can be minimized. As a result, a film with a uniform thickness can be obtained. Consequently, the manufacturability of the film can be enhanced. Furthermore, troubles, such as vent flow and instability of extrusion strands during manufacturing of a masterbatch, can be reduced. Hence, the manufacturability can be enhanced. In conjunction therewith, the blocking due to the modifier that has bled out during storage of the masterbatch can be suppressed.

EXAMPLES

With reference to Examples and Comparative Examples, the configurations and effects of the present embodiment will be more specifically described. In the following description, "parts" means parts by mass.

The compound (A), the compound (B), the nonionic surfactant (C), and the polyolefin-based resin used in each of Examples below are as follows.

Compound (A)

The compound (A) is a diester represented by Formula (1) below; and the number of carbon atoms and the like of $R^1$ to $R^3$ of the compound (A) used in Examples are shown in Table 1:

[Compound (A)]

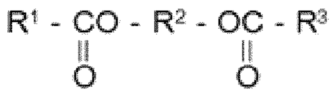

Formula (1)

where $R^1$ and $R^3$ are each a hydrocarbon group having 5 to 21 carbon atoms; and $R^2$ is a residue with all the hydroxy groups removed from (poly)oxyalkylene glycol having 2 to 100 carbon atoms and having, in a molecule thereof, a (poly)oxyalkylene group composed of oxyalkylene units having 2 to 4 carbon atoms.

[Table 1]

Table 1

| | $R^1$ | $R^3$ | $R^2$ | | |
|---|---|---|---|---|---|
| | Number of Carbon Atoms | Number of Carbon Atoms | Oxyalkylene Unit | | Number of Carbon Atoms in Oxyalkylene Group |
| | | | Number of Carbon Atoms | Number of Repeating Units | |
| A-1 | 11 | 11 | 2 | 4 | 8 |
| A-2 | 17 | 17 | 2 | 9 | 18 |
| A-3 | 17 | 17 | 2 | 15 | 30 |
| A-4 | 7-17 | 7-17 | 2 | 9 | 18 |
| A-5 | 7-17 | 7-17 | 2 | 4 | 8 |
| A-6 | 11 | 11 | 2 | 2 | 4 |
| A-7 | 17 | 17 | 2 | 25 | 50 |
| A-8 | 21 | 21 | 2 | 9 | 18 |
| A-9 | 5 | 5 | 2 | 23 | 46 |
| A-10 | 11 | 11 | 2 | 45 | 90 |
| A-11 | 21 | 21 | 3 | 33 | 99 |
| a-1 | 11 | 11 | 2 | 100 | 200 |

(continued)

| | $R^1$ | $R^3$ | $R^2$ | | |
|---|---|---|---|---|---|
| | Number of Carbon Atoms | Number of Carbon Atoms | Oxyalkylene Unit | | Number of Carbon Atoms in Oxyalkylene Group |
| | | | Number of Carbon Atoms | Number of Repeating Units | |
| **a-2** | **1** | **1** | **2** | **9** | **18** |
| **a-3** | **27** | **27** | **2** | **4** | **8** |

In each of $R^1$ and $R^3$ of A-2 to A-5 and A-7, a saturated hydrocarbon group and an unsaturated hydrocarbon group are present in a mixed manner. Each of $R^1$ and $R^3$ of Examples other than A-2 to A-5 and A-7 is a saturated hydrocarbon group.

Compound (B)

The compound (B) is a monoester represented by Formula (2) below; and the number of carbon atoms and the like of $R^4$ and $R^5$ of the compound (B) used in Examples are shown in Table 2:

[Compound (B)]

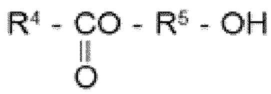

Formula (2)

where $R^4$ is a hydrocarbon group having 5 to 21 carbon atoms; and $R^5$ is a residue with all the hydroxy groups removed from (poly)oxyalkylene glycol having 2 to 100 carbon atoms and having, in a molecule thereof, a (poly)oxyalkylene group composed of oxyalkylene units having 2 to 4 carbon atoms.

[Table 2]

Table 2

| | $R^4$ | $R^5$ | | |
|---|---|---|---|---|
| | Number of Carbon Atoms | Oxyalkylene Unit | | Number of Carbon Atoms in Oxyalkylene Group |
| | | Number of Carbon Atoms | Number of Repeating Units | |
| **B-1** | **11** | **2** | **4** | **8** |
| **B-2** | **17** | **2** | **9** | **18** |
| **B-3** | **17** | **2** | **15** | **30** |
| **B-4** | **7-17** | **2** | **9** | **18** |
| **B-5** | **7-17** | **2** | **4** | **8** |
| **B-6** | **11** | **2** | **2** | **4** |
| **B-7** | **11** | **2** | **25** | **50** |
| **B-8** | **21** | **2** | **9** | **18** |
| **B-9** | **5** | **2** | **23** | **46** |

(continued)

| | $R^4$ | $R^5$ | | |
|---|---|---|---|---|
| | Number of Carbon Atoms | Oxyalkylene Unit | | Number of Carbon Atoms in Oxyalkylene Group |
| | | Number of Carbon Atoms | Number of Repeating Units | |
| B-10 | 11 | 2 | 45 | 90 |
| B-11 | 21 | 3 | 33 | 99 |
| b-1 | 11 | 2 | 100 | 200 |
| b-2 | 1 | 2 | 9 | 18 |
| b-3 | 27 | 2 | 4 | 8 |

In each of $R^4$ of B-2 to B-5 and B-7, a saturated hydrocarbon group and an unsaturated hydrocarbon group are present in a mixed manner. Each of $R^4$ of Examples other than B-2 to B-5 and B-7 is a saturated hydrocarbon group.

Nonionic surfactant (C)

C-1: partial ester of glycerin and oleic acid

C-2: partial ester of diglycerin and lauric acid

C-3: partial ester of diglycerin and oleic acid

C-4: partial ester of tetraglycerin and oleic acid

Polyolefin-Based Resin

P-1: ethylene-1-hexene copolymer (C6-LLDPE, density: 0.930 g/$cm^3$, MFR: 1.0 g/10 min, content ratio of ethylene: 96%)
P-2: ethylene-1-butene copolymer (C4-LLDPE, density: 0.920 g/$cm^3$, MFR: 2.1 g/10 min, content ratio of ethylene: 95%)
P-3: polyethylene (LDPE, density: 0.927 g/$cm^3$, MFR: 4.0 g/10 min)
P-4: ethylene-propylene copolymer (co-PP, density: 0.900 g/$cm^3$, MFR: 8.0 g/10 min, content ratio of ethylene: 3.5%)
P-5: ethylene-vinyl acetate copolymer (EVA, density: 0.930 g/$cm^3$, MFR: 1.5 g/10 min, content ratio of ethylene: 90%)

Example 1

70 parts of a compound A-1, 30 parts of a compound B-1, and 200 parts of a partial ester (C-1) of glycerin and oleic acid were uniformly mixed to obtain a modifier (K-1).

Examples 2 to 25 and Comparative Examples 1 to 6

Modifiers (K-2 to K-25 and k-1 to k-6) of Examples 2 to 25 and Comparative Examples 1 to 6 having compositions shown in Table 3 were obtained as in the modifier (K-1) of Example 1.

[Table 3]

Table 3

| | Modifier | | | | | | |
|---|---|---|---|---|---|---|---|
| | Type | Compound (A) | | Compound (B) | | Compound (C) | |
| | | Type | Content (Parts) | Type | Content (Parts) | Type | Content (Parts) |
| Example 1 | K-1 | A-1 | 70 | B-1 | 30 | C-1 | 200 |
| Example 2 | K-2 | A-2 | 60 | B-2 | 40 | C-2 | 20 |
| Example 3 | K-3 | A-3 | 50 | B-3 | 50 | C-3 | 100 |
| Example 4 | K-4 | A-1 | 39 | B-1 | 23 | C-1 | 100 |
| | | A-2 | 23 | B-2 | 15 | | |
| Example 5 | K-5 | A-1 | 21 | B-1 | 52 | C-2 | 50 |
| | | A-3 | 17 | B-2 | 4 | | |
| Example 5 | K-6 | A-1 | 70 | B-1 | 30 | - | - |
| Example 7 | K-7 | A-2 | 50 | B-2 | 40 | - | - |
| Example 8 | K-8 | A-3 | 50 | B-3 | 50 | - | - |
| Example9 | K-9 | A-4 | 40 | B-4 | 60 | - | - |
| Example 10 | K-10 | A-6 | 30 | B-6 | 70 | - | - |
| Example 11 | K-11 | A-1 | 20 | B-1 | 40 | - | - |
| | | A-2 | 13 | B-2 | 27 | - | - |
| Example 12 | K-12 | A-1 | 27 | B-1 | 52 | - | - |
| | | A-3 | 17 | B-2 | 4 | - | - |
| Example 13 | K-13 | A-2 | 15 | B-1 | 38 | - | - |
| | | A-4 | 33 | B-4 | 14 | - | - |
| Example 14 | K-14 | A-2 | 20 | B-2 | 80 | - | - |
| Example 15 | K-15 | A-3 | 25 | B-3 | 75 | - | - |
| Example 15 | K-16 | A-3 | 50 | B-3 | 10 | - | - |
| | | A-5 | 30 | B-5 | 10 | - | - |
| Example 17 | K-17 | A-3 | 10 | B-3 | 90 | - | - |
| Example 18 | K-18 | A-1 | 90 | B-1 | 10 | - | - |
| Example 19 | K-19 | A-7 | 30 | B-7 | 70 | - | - |
| Example 20 | K-20 | A-8 | 30 | B-8 | 70 | - | - |
| Example 21 | K-21 | A-3 | 10 | B-3 | 90 | C-1 | 400 |
| Example 22 | K-22 | A-1 | 90 | B-1 | 10 | C-4 | 200 |
| Example 23 | K-23 | A-9 | 10 | B-9 | 90 | - | - |
| Example 24 | K-24 | A-10 | 80 | B-10 | 20 | - | - |
| Example 25 | K-25 | A-11 | 15 | B-11 | 85 | - | - |
| Comparative Example 1 | k-1 | A-1 | 100 | - | - | - | - |
| Comparative Example 2 | k-2 | - | - | B-3 | 100 | - | - |
| Comparative Example 3 | k-3 | a-1 | 80 | B-3 | 20 | - | - |
| Comparative Example 4 | k-4 | A-2 | 20 | b-1 | 80 | - | - |
| Comparative Example 5 | k-5 | a-2 | 80 | B-1 | 20 | - | - |

(continued)

| | Modifier | | | | | | |
|---|---|---|---|---|---|---|---|
| | Type | Compound (A) | | Compound (B) | | Compound (C) | |
| | | Type | Content (Parts) | Type | Content (Parts) | Type | Content (Parts) |
| **Comparative Example 6** | **k-6** | **a-3** | **50** | **b-3** | **50** | - | - |

Example 26

15 parts of the modifier (K-1) was supplied with a biaxial extruder to 85 parts of an ethylene-1-hexene copolymer (P-1) melted at 220°C by fluid injection. The contents were then melted and kneaded. The obtained mixture was granulated to obtain a masterbatch (M-1).

Examples 27 to 50 and Comparative Examples 7 to 12

Masterbatches (M-2 to M-25 and m-1 to m-6) of Examples 27 to 50 and Comparative Examples 7 to 12 having compositions shown in Table 4 below were obtained as in the masterbatch (M-1) of Example 26.

<<Evaluation of Masterbatches>>

The masterbatches of Examples and Comparative Examples were evaluated by the test methods described below. The evaluation results are shown in Table 4.

Manufacturability

The manufacturability was evaluated from the manufacturing state of each masterbatch based on the following criteria:

A: No vent flow nor instability of extrusion strands occurred.
B: Although disturbance in running of strands occurred, no vent flow occurred.
C: Instability of extrusion strands and vent flow occurred.

Blocking Properties

The masterbatches stored at 40°C for 30 days were each supplied into a transparent cuboid container (length x width x height = 16.2 cm x 6.3 cm x 5.4 cm) placed on a horizontal platform. The surface of the content was flattened. While one end of the container in the longitudinal direction was left in contact with the platform, the other end of the container was lifted, so that the container was tilted. The height h (cm) of the other end of the container from the platform was measured when the masterbatch started to slip. The angle of repose $\theta$ was determined by the following equation:

$$\text{Angle of repose } \theta = (180/\pi) \text{ x } \sin^{-1} (16.2/h)$$

The blocking properties of each masterbatch were evaluated in accordance with the following criteria based on the angle of repose $\theta$:

A: $55° \geq \theta$

B: $65° \geq \theta > 55°$

C: $\theta > 65°$

[Table 4]

Table 4

| | Masterbatch | | | | | | |
|---|---|---|---|---|---|---|---|
| | Type | Polyolefin-Based Resin | | Modifier | | Manufacturability | Blocking Properties |
| | | Type | Content (Parts) | Type | Content (Parts) | | |
| Example 26 | M-1 | P-1 | 85.0 | K-1 | 15.0 | A | A |
| Example 27 | M-2 | P-1 | 87.5 | K-2 | 12.5 | A | A |
| Example 26 | M-3 | P-1 | 90.0 | K-3 | 10.0 | A | A |
| Example 29 | M-4 | P-1 | 90.0 | K-4 | 10.0 | A | A |
| Example 30 | M-5 | P-4 | 87.5 | K-5 | 12.5 | A | A |
| Example 31 | M-6 | P-1 | 900 | K-6 | 10.0 | A | A |
| Example 32 | M-7 | P-1 | 87.5 | K-7 | 125 | A | A |
| Example 33 | M-8 | P-2 | 900 | K-8 | 10.0 | A | A |
| Example 34 | M-9 | P-1 | 90.0 | K-9 | 10.0 | A | A |
| Example 35 | M-10 | P-3 | 80.0 | K-10 | 20.0 | A | A |
| Example 3δ | M-11 | P-4 | 90.0 | K-11 | 10.0 | A | A |
| Example 37 | M-12 | P-1 | 90.0 | K-12 | 10.0 | A | A |
| Example 38 | M-13 | P-5 | 850 | K-13 | 15.0 | A | A |
| Example 39 | M-14 | P-1 | 90.0 | K-14 | 10.0 | B | A |
| Example 40 | M-15 | P-1 | 90.0 | K-15 | 10.0 | B | A |
| Example 41 | M-16 | P-1 | 87.5 | K-16 | 12.5 | A | B |
| Example 42 | M-17 | P-1 | 90.0 | K-17 | 10.0 | B | A |
| Example 43 | M-18 | P-1 | 85.0 | K.18 | 15.0 | A | B |
| Example 44 | M-19 | P-1 | 90.0 | K-19 | 10.0 | B | A |
| Example 45 | M-20 | P-1 | 90.0 | K-20 | 10.0 | A | A |
| Example 46 | M-21 | P-1 | 950 | K-21 | 5.0 | B | A |
| Example 47 | M-22 | P-1 | 90.0 | K-22 | 10.0 | B | B |
| Example 48 | M-23 | P-1 | 900 | K-23 | 100 | B | B |
| Example 49 | M-24 | P-1 | 90.0 | K-24 | 10.0 | B | B |
| Example 50 | M-25 | P-1 | 90.0 | K-25 | 10.0 | B | A |
| Comparative Example 7 | m-1 | P-1 | 87.5 | k-1 | 12.5 | A | C |
| Comparative Example 8 | m-2 | P-1 | 90.0 | k-2 | 10.0 | C | A |
| Comparative Examples | m-3 | P-1 | 90.0 | k-3 | 10.0 | C | A |
| Comparative Example 10 | m-4 | P-1 | 950 | k-4 | 5.0 | C | A |
| Comparative Example 11 | m-5 | P-1 | 90.0 | k-5 | 10.0 | B | B |

(continued)

| | Masterbatch | | | | | | |
|---|---|---|---|---|---|---|---|
| | Type | Polyolefin-Based Resin | | Modifier | | Manufacturability | Blocking Properties |
| | | Type | Content (Parts) | Type | Content (Parts) | | |
| Comparative Example 12 | m-6 | P-1 | 85.0 | k-6 | 15.0 | A | A |

**Resin**

| | | | |
|---|---|---|---|
| **P-1** | **C6-LLDPE** | **ethylene-1-hexene copolymer** | **(density: 0.930 g/cm$^3$, MFR: 1.0 g/10 min, ethylene copolymerizatio ratio: 96%)** |
| **P-2** | **C4-LLDPE** | **ethylene-1-butene copolymer** | **(density. 0 920 g/cm$^3$, MFR: 2.1 g/10 min, ethylene copolymerizatio ratio: 95%)** |
| **P-3** | **LDPE** | **polyethylene** | **(density: 0.927 g/cm$^3$, MFR: 4.0 g/10 min)** |
| **P-4** | **co-PP** | **ethylene-propylene copolymer** | **(density: 0.900 g/cm$^3$, MFR: 8.0 g/10 min, ethylene copolymerizatio ratio: 3.5%)** |
| **P-5** | **EVA** | **ethylene-vinyl acetate copolymer** | **(density: 0.930 g/cm$^3$, MFR: 1.5 g/10 min, ethylene copolymerizatio ratio: 90%)** |

The masterbatches of Examples 26 to 50 were found to have high manufacturability. In conjunction therewith, blocking suppressed to a low level. In contrast, masterbatches of Comparative Examples 7 to 10 were inferior in either the manufacturability or the blocking properties.

Example 51

3.3 parts of the masterbatch (M-1) and 96.7 parts of the ethylene-1-hexene copolymer (P-1) were mixed with a tumbler blender. The mixture was then melted at 190°C with an inflation molder. The melted mixture was extruded while being cooled in an environment at 20°C. In this manner, a polyolefin-based resin film (SF-1) having a thickness of 40 μm was manufactured.

Examples 52 to 75 and Comparative Examples 13 to 18

Polyolefin-based resin films (SF-2 to SF-25 and sf-1 to sf-6) of Examples 52 to 75 and Comparative Examples 13 to 18 having compositions and film thicknesses shown in Table 5 were manufactured as in the polyolefin-based resin film (SF-1) of Example 51.

«Evaluation of Films»

The antifogging properties and the manufacturability of the polyolefin-based resin films were evaluated by the test methods described below. The evaluation results are shown in Table 5.

Antifogging Properties

The films were each stored either at 20°C for 24 hours or at 35°C for 30 days. The film was then attached onto the opening of a 100 ml beaker containing 60 ml water at 20°C. Subsequently, the beaker was left to stand at 5°C for one hour. Thereafter, adhesion of waterdrops the film were observed. The antifogging properties were evaluated based on the following criteria. Note that when the film is a laminate film, the laminate film was attached onto the opening of the beaker such that a first layer was on the inside.

A: No adhesion of waterdrops was observed, and the film was transparent.
B: Adhesion of large waterdrops was observed, but the film was transparent.
C: Adhesion of many fine waterdrops was observed, and the film was opaque.

Film Manufacturability

The manufacturability was evaluated from the manufacturing state of each film based on the following criteria:

A: No variation in extrusion occurred and unevenness in film thickness of the film was less than ± 5 μm relative to the determined thickness.
B: A small variation in extrusion occurred, and unevenness in thickness of the film was less than ± 8 μm relative to the set thickness.
C: Streaks or unevenness in film thickness due to a variation in extrusion occurred.

[Table 5]

Table 5

| | Resin Film | | | | | | | | |
|---|---|---|---|---|---|---|---|---|---|
| | Type | Polyolefin-Based Resin | | Masterbatch | | Film Thickness | Antifogging Properties | | Manufacturability |
| | | Type | Content (Parts) | Type | Content (Parts) | (μm) | 24 Hours | 30 Days | |
| Example 51 | SF-1 | P-1 | 96.7 | M-1 | 3.3 | 40 | A | A | A |
| Example 52 | SF-2 | P-1 | 92.0 | M-2 | 8.0 | 20 | A | A | A |
| Example 53 | SF-3 | P-1 | 95.0 | M-3 | 5.0 | 40 | A | A | A |
| Example 54 | SF-4 | P-1 | 92.5 | M-4 | 7.5 | 30 | A | A | A |
| Example 55 | SF-5 | P-4 | 96.8 | M-5 | 3.2 | 50 | A | A | A |
| Example 56 | SF-6 | P-1 | 95.0 | M-6 | 5.0 | 40 | A | A | A |
| Example 57 | SF-7 | P-1 | 98.0 | M-7 | 2.0 | 40 | A | A | A |
| Example 58 | SF-8 | P-2 | 96.0 | M-8 | 4.0 | 60 | A | A | A |
| Example 59 | SF-9 | P-1 | 95.0 | M-9 | 5.0 | 40 | A | A | A |
| Example 60 | SF-10 | P-3 | 98.0 | M-10 | 2.0 | 40 | A | A | A |
| Example 61 | SF-11 | P-4 | 95.0 | M-11 | 5.0 | 40 | A | A | A |
| Example 62 | SF-12 | P-1 | 95.0 | M-12 | 5.0 | 40 | A | A | A |
| Example 63 | SF-13 | P-5 | 96.7 | M-13 | 3.3 | 40 | A | A | A |
| Example 64 | SF-14 | P-1 | 95.0 | M-14 | 5.0 | 40 | A | A | A |
| Example 65 | SF-15 | P-1 | 95.0 | M-15 | 5.0 | 40 | A | A | A |
| Example 66 | SF-16 | P-1 | 96.0 | M-16 | 4.0 | 40 | A | A | A |
| Example 67 | SF-17 | P-1 | 95.0 | M-17 | 5.0 | 40 | A | A | B |
| Example 68 | SF-18 | P-1 | 93.3 | M-18 | 6.7 | 40 | B | B | A |
| Example 69 | SF-19 | P-1 | 95.0 | M-19 | 5.0 | 40 | A | A | B |
| Example 70 | SF-20 | P-1 | 95.0 | M-20 | 5.0 | 40 | B | B | A |
| Example 71 | SF-21 | P-1 | 85.0 | M-21 | 15.0 | 30 | A | A | B |
| Example 72 | SF-22 | P-1 | 95.0 | M-22 | 5.0 | 40 | B | A | A |
| Example 73 | SF-23 | P-1 | 95.0 | M-23 | 5.0 | 40 | A | A | B |
| Example 74 | SF-24 | P-1 | 95.0 | M-24 | 5.0 | 40 | B | B | B |
| Example 75 | SF-25 | P-1 | 95.0 | M-25 | 5.0 | 40 | B | B | B |
| Comparative Example 13 | sf-1 | P-1 | 92.0 | m-1 | 8.0 | 40 | C | C | A |
| Comparative Example 14 | sf-2 | P-1 | 95.0 | m-2 | 5.0 | 40 | B | A | B |
| Comparative Example 15 | sf-3 | P-1 | 95.0 | m-3 | 5.0 | 40 | C | C | B |
| Comparative Example 16 | sf-4 | P-1 | 90.0 | m-4 | 10.0 | 40 | C | C | C |
| Comparative Example 17 | sf-5 | P-1 | 95.0 | m-5 | 5.0 | 40 | C | C | B |
| Comparative Example 18 | sf-6 | P-1 | 96.7 | m-6 | 3.3 | 40 | C | C | A |

Resin

| | | | |
|---|---|---|---|
| P-1 | C6-LLDPE | ethylene-1-hexene copolymer | (density: 0.930 g/cm$^3$, MFR: 1.0 g/10 min, ethylene copolymerizatio ratio: 96%) |
| P-2 | C4-LLDPE | ethylene-1-butene copolymer | (density: 0.920 g/cm$^3$, MFR: 2.1 g/10 min, ethylene copolymerizatio ratio: 95%) |
| P-3 | LDPE | polyethylene | (density: 0.927 g/cm$^3$, MFR: 4.0 g/10 min) |
| P-4 | co-PP | ethylene-propylene copolymer | (density: 0.900 g/cm$^3$, MFR: 8.0 g/10 min, ethylene copolymerizatio ratio: 3.5%) |
| P-5 | EVA | ethylene-vinyl acetate copolymer | (density: 0.930 g/cm$^3$, MFR: 1.5 g/10 min, ethylene copolymerizatio ratio: 90%) |

The polyolefin-based resin films of Examples 51 to 75 exhibited excellent antifogging properties and manufacturability. In contrast, the polyolefin-based resin films of Comparative Examples 13 and 15 to 18 were inferior in at least one of the antifogging properties and the manufacturability.

Example 76

10 parts of the masterbatch (M-1) and 90 parts of the ethylene-1-hexene copolymer (P-1) were mixed with a tumbler blender. The obtained mixture was used as a molding material for a first layer (polyolefin-based resin film). The ethylene-1-hexene copolymer (P-1) was used as a molding material for both a second layer (intermediate layer) and a third layer. These molding materials were each melted with an inflation molder at 190°C. The melted molding materials were coextruded while being cooled in an environment at 20°C. In this manner, a laminate film (MF-1) having a thickness of 55 μm and including the first layer with a film thickness of 15 μm, the second layer with a film thickness of 30 μm, and the third layer with a film thickness of 10 μm was manufactured.

Examples 77 to 100 and Comparative Examples 19 to 24

Laminate films (MF-2 to MF-25 and mf-1 to mf-6) of Examples 77 to 100 and Comparative Examples 19 to 24 having compositions and film thicknesses shown in Table 6 were manufactured as in the laminate film (MF-1) of Example 76.

[Table 6]

Table 6

| | Type | First Layer | | | | | Second Layer | | | | | Third Layer | | | Total Film Thickness |
|---|---|---|---|---|---|---|---|---|---|---|---|---|---|---|---|
| | | Polyolefin-Based Resin | | Masterbatch | | Film Thickness | Polyolefin-Based Resin | | Masterbatch | | Film Thickness | Polyolefin-Based Resin | | Film Thickness | |
| | | Type | Content (Parts) | Type | Content (Parts) | (μm) | Type | Content (Parts) | Type | Content (Parts) | (μm) | Type | Content (Parts) | (μm) | (μm) |
| Example 76 | MF-1 | P-1 | 90.00 | M-1 | 10.00 | 15 | P-1 | 100.00 | — | — | 30 | P-1 | 100.00 | 10 | 55 |
| Example 77 | MF-2 | P-1 | 84.00 | M-2 | 16.00 | 10 | P-1 | 100.00 | — | — | 20 | P-1 | 100.00 | 10 | 40 |
| Example 78 | MF-3 | P-1 | 75.00 | M-3 | 25.00 | 10 | P-1 | 100.00 | — | — | 10 | P-1 | 100.00 | 10 | 30 |
| Example 79 | MF-4 | P-1 | 85.00 | M-4 | 15.00 | 10 | P-1 | 100.00 | — | — | 30 | P-1 | 100.00 | 10 | 50 |
| Example 80 | MF-5 | P-4 | 84.00 | M-5 | 16.00 | 20 | P-4 | 92.00 | M-5 | 8.00 | 50 | P-4 | 100.00 | 10 | 80 |
| Example 81 | MF-6 | P-1 | 85.00 | M-6 | 15.00 | 15 | P-1 | 100.00 | — | — | 30 | P-1 | 100.00 | 10 | 55 |
| Example 82 | MF-7 | P-1 | 84.00 | M-7 | 16.00 | 10 | P-1 | 100.00 | — | — | 20 | P-1 | 100.00 | 10 | 40 |
| Example 83 | MF-8 | P-2 | 75.00 | M-8 | 25.00 | 20 | P-2 | 100.00 | — | — | 20 | P-2 | 100.00 | 20 | 60 |
| Example 84 | MF-9 | P-1 | 82.50 | M-9 | 17.50 | 10 | P-1 | 100.00 | — | — | 40 | P-1 | 100.00 | 10 | 60 |
| Example 85 | MF-10 | P-3 | 85.00 | M-10 | 15.00 | 15 | P-3 | 100.00 | — | — | 20 | P-3 | 100.00 | 10 | 45 |
| Example 86 | MF-11 | P-4 | 75.00 | M-11 | 25.00 | 10 | P-4 | 87.50 | M-11 | 12.50 | 20 | P-4 | 100.00 | 10 | 40 |
| Example 87 | MF-12 | P-1 | 80.00 | M-12 | 20.00 | 10 | P-1 | 100.00 | — | — | 40 | P-1 | 100.00 | 10 | 60 |
| Example 88 | MF-13 | P-5 | 90.00 | M-13 | 10.00 | 40 | P-5 | 100.00 | — | — | 40 | P-5 | 100.00 | 20 | 100 |
| Example 89 | MF-14 | P-1 | 80.00 | M-14 | 20.00 | 10 | P-1 | 100.00 | — | — | 20 | P-1 | 100.00 | 10 | 40 |
| Example 90 | MF-15 | P-1 | 80.00 | M-15 | 20.00 | 10 | P-1 | 100.00 | — | — | 20 | P-1 | 100.00 | 10 | 40 |
| Example 91 | MF-16 | P-1 | 84.00 | M-16 | 16.00 | 10 | P-1 | 100.00 | — | — | 40 | P-1 | 100.00 | 10 | 60 |
| Example 92 | MF-17 | P-1 | 85.00 | M-17 | 15.00 | 10 | P-1 | 95.00 | M-17 | 5.00 | 20 | P-1 | 100.00 | 10 | 40 |
| Example 93 | MF-18 | P-1 | 86.67 | M-18 | 13.33 | 15 | P-1 | 100.00 | — | — | 30 | P-1 | 100.00 | 10 | 55 |
| Example 94 | MF-19 | P-1 | 80.00 | M-19 | 20.00 | 10 | P-1 | 100.00 | — | — | 40 | P-1 | 100.00 | 10 | 60 |
| Example 95 | MF-20 | P-1 | 85.00 | M-20 | 15.00 | 20 | P-1 | 95.00 | M-20 | 5.00 | 40 | P-1 | 100.00 | 10 | 70 |
| Example 96 | MF-21 | P-1 | 55.00 | M-21 | 45.00 | 10 | P-1 | 100.00 | — | — | 40 | P-1 | 100.00 | 10 | 60 |
| Example 97 | MF-22 | P-1 | 80.00 | M-22 | 20.00 | 10 | P-1 | 100.00 | — | — | 40 | P-1 | 100.00 | 10 | 60 |
| Example 98 | MF-23 | P-1 | 87.50 | M-23 | 12.50 | 20 | P-1 | 100.00 | — | — | 20 | P-1 | 100.00 | 10 | 50 |
| Example 99 | MF-24 | P-1 | 80.00 | M-24 | 20.00 | 10 | P-1 | 100.00 | — | — | 40 | P-1 | 100.00 | 10 | 60 |
| Example 100 | MF-25 | P-1 | 80.00 | M-25 | 20.00 | 10 | P-1 | 100.00 | — | — | 40 | P-1 | 100.00 | 10 | 60 |
| Comparative Example 19 | mf-1 | P-1 | 84.00 | m-1 | 16.00 | 15 | P-1 | 100.00 | — | — | 30 | P-1 | 100.00 | 10 | 55 |
| Comparative Example 20 | mf-2 | P-1 | 85.00 | m-2 | 15.00 | 15 | P-1 | 95.00 | m-2 | 5.00 | 30 | P-1 | 100.00 | 10 | 55 |
| Comparative Example 21 | mf-3 | P-1 | 85.00 | m-3 | 15.00 | 15 | P-1 | 90.00 | m-3 | 10.00 | 30 | P-1 | 100.00 | 10 | 55 |
| Comparative Example 22 | mf-4 | P-1 | 70.00 | m-4 | 30.00 | 20 | P-1 | 85.00 | m-4 | 15.00 | 20 | P-1 | 100.00 | 10 | 50 |
| Comparative Example 23 | mf-5 | P-1 | 80.00 | m-5 | 20.00 | 10 | P-1 | 100.00 | — | — | 40 | P-1 | 100.00 | 10 | 60 |
| Comparative Example 24 | mf-6 | P-1 | 83.33 | m-6 | 16.67 | 10 | P-1 | 100.00 | — | — | 40 | P-1 | 100.00 | 10 | 60 |

Resin

| | | | |
|---|---|---|---|
| P-1 | C6-LLDPE | ethylene-1-hexene copolymer | (density: 0.930 g/cm$^3$, MFR: 1.0 g/10 min, ethylene copolymerizatio ratio: 96%) |
| P-2 | C4-LLDPE | ethylene-1-butene copolymer | (density: 0.920 g/cm$^3$, MFR: 2.1 g/10 min, ethylene copolymerizatio ratio: 95%) |
| P-3 | LDPE | polyethylene | (density: 0.927 g/cm$^3$, MFR: 4.0 g/10 min) |
| P-4 | co-PP | ethylene-propylene copolymer | (density: 0.900 g/cm$^3$, MFR: 8.0 g/10 min, ethylene copolymerizatio ratio: 3.5%) |
| P-5 | EVA | ethylene-vinyl acetate copolymer | (density: 0.930 g/cm$^3$, MFR: 1.5 g/10 min, ethylene copolymerizatio ratio: 90%) |

The antifogging properties and the manufacturability of each of the laminate films (MF-1 to MF-25 and mf-1 to mf-6) were evaluated by the test methods described above. The evaluation results are shown in Table 7.

[Table 7]

Table 7

| | Type | Antifogging Properties | | Manufacturability |
|---|---|---|---|---|
| | | 24 Hours | 30 Days | |
| Example 76 | MF-1 | A | A | A |
| Exam ple 77 | MF-2 | A | A | A |
| Exam ple 78 | MF-3 | A | A | A |
| Example 79 | MF-4 | A | A | A |
| Example 80 | MF-5 | A | A | A |
| Example 81 | MF-6 | A | A | A |
| Example 82 | MF-7 | A | A | A |
| Example 83 | MF-8 | A | A | A |
| Example 84 | MF-9 | A | A | A |
| Example 85 | MF-10 | A | A | A |
| Example 86 | MF-11 | A | A | A |
| Example 87 | MF-12 | A | A | A |
| Example 88 | MF-13 | A | A | A |
| Example 89 | MF-14 | A | A | A |
| Example 90 | MF-15 | A | A | A |
| Example 91 | MF-16 | A | A | A |
| Example 92 | MF-17 | A | A | B |
| Exam ple 93 | MF-18 | B | B | A |
| Example 94 | MF-19 | A | A | B |
| Exam ple 95 | MF-20 | B | B | A |
| Exam ple 96 | MF-21 | A | A | B |
| Example 97 | MF-22 | B | A | A |
| Example 98 | MF-23 | A | A | B |
| Example 99 | MF-24 | B | B | B |
| Example 100 | MF-25 | B | B | B |
| Comparative Example 19 | mf-1 | C | C | A |
| Comparative Example 20 | mf-2 | B | A | B |
| Comparative Example 21 | mf-3 | C | C | B |
| Comparative Example 22 | mf-4 | C | C | C |
| Comparative Example 23 | mf-5 | C | C | B |
| Comparative Example 24 | mf-6 | C | C | A |

The laminate films of Examples 76 to 100 exhibited excellent antifogging properties and film manufacturability.

In contrast, the laminate films of Comparative Examples 19 and 21 to 24 were inferior in at least one of the antifogging properties and the film manufacturability.

Example 101

1.5 parts of the modifier (K-1) and 98.5 parts of the ethylene-1-hexene copolymer (P-1) were mixed with a tumbler blender. The obtained mixture was used as a molding material for a first layer (polyolefin-based resin film). The ethylene-1-hexene copolymer (P-1) was used as a molding material for both a second layer (intermediate layer) and a third layer. These molding materials were each melted with an inflation molder at 190°C. The melted molding materials were coextruded while being cooled in an environment at 20°C. In this manner, a laminate film (F-1) having a thickness of 55 μm and including the first layer with a film thickness of 15 μm, the second layer with a film thickness of 30 μm, and the third layer with a film thickness of 10 μm was manufactured.

Examples 102 to 125 and Comparative Examples 25 to 30

Laminate films (F-2 to F-25 and f-1 to f-6) of Examples 102 to 125 and Comparative Examples 25 to 30 having compositions and film thicknesses shown in Table 8 were manufactured as in the laminate film (F-1) of Example 101.

[Table 8]

Table 8

| | Type | First Layer | | | | | Second Layer | | | | | Third Layer | | | Total Film Thickness (µm) |
|---|---|---|---|---|---|---|---|---|---|---|---|---|---|---|---|
| | | Polyolefin-Based Resin | | Modifier | | Film | Polyolefin-Based Resin | | Modifier | | Film | Polyolefin-Based Resin | | Film | |
| | | Type | Content (Parts) | Type | Content (Parts) | Thickness (µm) | Type | Content (Parts) | Type | Content (Parts) | Thickness (µm) | Type | Content (Parts) | Thickness (µm) | |
| Example 101 | F-1 | P-1 | 98.50 | K-1 | 1.50 | 15 | P-1 | 100.00 | - | - | 30 | P-1 | 100 | 10 | 55 |
| Example 102 | F-2 | P-1 | 98.50 | K-2 | 1.50 | 10 | P-1 | 100.00 | - | - | 20 | P-1 | 100 | 10 | 40 |
| Example 103 | F-3 | P-1 | 97.50 | K-3 | 2.50 | 10 | P-1 | 100.00 | - | - | 10 | P-1 | 100 | 10 | 30 |
| Example 104 | F-4 | P-1 | 98.50 | K-4 | 1.50 | 10 | P-1 | 100.00 | - | - | 30 | P-1 | 100 | 10 | 50 |
| Example 105 | F-5 | P-4 | 98.00 | K-5 | 2.00 | 20 | P-4 | 99.00 | K-5 | 1.00 | 50 | P-4 | 100 | 10 | 80 |
| Example 106 | F-6 | P-1 | 98.50 | K-6 | 1.50 | 15 | P-1 | 100.00 | - | - | 30 | P-1 | 100 | 10 | 55 |
| Example 107 | F-7 | P-1 | 98.00 | K-7 | 2.00 | 10 | P-1 | 100.00 | - | - | 20 | P-1 | 100 | 10 | 40 |
| Example 108 | F-8 | P-2 | 97.50 | K-8 | 2.50 | 20 | P-2 | 100.00 | - | - | 20 | P-2 | 100 | 20 | 60 |
| Example 109 | F-9 | P-1 | 98.25 | K-9 | 1.75 | 10 | P-1 | 100.00 | - | - | 40 | P-1 | 100 | 10 | 60 |
| Example 110 | F-10 | P-3 | 97.00 | K-10 | 3.00 | 15 | P-3 | 100.00 | - | - | 20 | P-3 | 100 | 10 | 45 |
| Example 111 | F-11 | P-4 | 97.50 | K-11 | 2.50 | 10 | P-4 | 98.75 | K-11 | 1.25 | 20 | P-4 | 100 | 10 | 40 |
| Example 112 | F-12 | P-1 | 98.00 | K-12 | 2.00 | 10 | P-1 | 100.00 | - | - | 40 | P-1 | 100 | 10 | 60 |
| Example 113 | F-13 | P-5 | 98.00 | K-13 | 2.00 | 40 | P-5 | 100.00 | - | - | 40 | P-5 | 100 | 20 | 100 |
| Example 114 | F-14 | P-1 | 98.00 | K-14 | 2.00 | 10 | P-1 | 100.00 | - | - | 20 | P-1 | 100 | 10 | 40 |
| Example 115 | F-15 | P-1 | 98.00 | K-15 | 2.00 | 10 | P-1 | 100.00 | - | - | 20 | P-1 | 100 | 10 | 40 |
| Example 116 | F-16 | P-1 | 98.00 | K-16 | 2.00 | 10 | P-1 | 100.00 | - | - | 40 | P-1 | 100 | 10 | 60 |
| Example 117 | F-17 | P-1 | 98.50 | K-17 | 1.50 | 10 | P-1 | 99.50 | K-17 | 0.50 | 20 | P-1 | 100 | 10 | 40 |
| Example 118 | F-18 | P-1 | 98.00 | K-18 | 2.00 | 15 | P-1 | 100.00 | - | - | 30 | P-1 | 100 | 10 | 55 |
| Example 119 | F-19 | P-1 | 98.00 | K-19 | 2.00 | 10 | P-1 | 100.00 | - | - | 40 | P-1 | 100 | 10 | 60 |
| Example 120 | F-20 | P-1 | 98.50 | K-20 | 1.50 | 20 | P-1 | 99.50 | K-20 | 0.50 | 40 | P-1 | 100 | 10 | 70 |
| Example 121 | F-21 | P-1 | 97.75 | K-21 | 2.25 | 10 | P-1 | 100.00 | - | - | 40 | P-1 | 100 | 10 | 60 |
| Example 122 | F-22 | P-1 | 98.00 | K-22 | 2.00 | 10 | P-1 | 100.00 | - | - | 40 | P-1 | 100 | 10 | 60 |
| Example 123 | F-23 | P-1 | 98.75 | K-23 | 1.25 | 20 | P-1 | 100.00 | - | - | 20 | P-1 | 100 | 10 | 50 |
| Example 124 | F-24 | P-1 | 98.00 | K-24 | 2.00 | 10 | P-1 | 100.00 | - | - | 40 | P-1 | 100 | 10 | 60 |
| Example 125 | F-25 | P-1 | 98.00 | K-25 | 2.00 | 10 | P-1 | 100.00 | - | - | 40 | P-1 | 100 | 10 | 60 |
| Comparative Example 25 | f-1 | P-1 | 98.00 | k-1 | 2.00 | 15 | P-1 | 99.25 | k-1 | 0.75 | 30 | P-1 | 100 | 10 | 55 |
| Comparative Example 26 | f-2 | P-1 | 98.50 | k-2 | 1.50 | 15 | P-1 | 99.50 | k-2 | 0.50 | 30 | P-1 | 100 | 10 | 55 |
| Comparative Example 27 | f-3 | P-1 | 98.50 | k-3 | 1.50 | 15 | P-1 | 99.00 | k-3 | 1.00 | 30 | P-1 | 100 | 10 | 55 |
| Comparative Example 28 | f-4 | P-1 | 98.50 | k-4 | 1.50 | 20 | P-1 | 99.25 | k-4 | 0.75 | 20 | P-1 | 100 | 10 | 50 |
| Comparative Example 29 | f-5 | P-1 | 98.00 | k-5 | 2.00 | 10 | P-1 | 100.00 | - | - | 40 | P-1 | 100 | 10 | 60 |
| Comparative Example 30 | f-6 | P-1 | 97.50 | k-6 | 2.50 | 10 | P-1 | 100.00 | - | - | 40 | P-1 | 100 | 10 | 60 |

The antifogging properties and the manufacturability of each of the laminate films (F-1 to F-25 and f-1 to f-6) were evaluated by the test methods described above. The evaluation results are shown Table 9.

[Table 9]

Table9

| | Type | Antifogging Properties | | Manufacturability |
|---|---|---|---|---|
| | | 24 Hours | 30 Days | |
| Example 101 | F-1 | A | A | A |
| Example 102 | F-2 | A | A | A |
| Example 103 | F-3 | A | A | A |
| Example 104 | F-4 | A | A | A |
| Example 105 | F-5 | A | A | A |
| Example 106 | F-6 | A | A | A |
| Example 107 | F-7 | A | A | A |
| Example 108 | F-6 | A | A | A |
| Example 109 | F-9 | A | A | A |
| Example 110 | F-10 | A | A | A |
| Example 111 | F-11 | A | A | A |
| Example 112 | F-12 | A | A | A |
| Example 113 | F-13 | A | A | A |
| Example 114 | F-14 | A | A | A |
| Example 115 | F-15 | A | A | A |
| Example 116 | F-16 | A | A | A |
| Example 117 | F-17 | A | A | B |
| Example 118 | F-18 | B | B | A |
| Example 119 | F-19 | A | A | B |
| Example 120 | F-20 | B | B | A |
| Example 121 | F-21 | A | A | B |
| Example 122 | F-22 | B | A | A |
| Example 123 | F-23 | A | A | B |
| Example 124 | F-24 | B | B | B |
| Example 125 | F-25 | B | B | B |
| Comparative Example 25 | f-1 | C | C | A |
| Comparative Example 26 | f-2 | B | A | B |
| Comparative Example 27 | f-3 | C | C | B |
| Comparative Example 28 | f-4 | C | C | C |
| Comparative Example 29 | f-5 | C | C | B |
| Comparative Example 30 | f-6 | C | C | A |

The laminate films of Examples 101 to 125 exhibited excellent antifogging properties and film manufacturability.

This proved that the modifier according to the present embodiment is able to achieve excellent antifogging properties and film manufacturability without undergoing the stage of a masterbatch. In contrast, the laminate films of Comparative Examples 25 and 27 to 30 were inferior in at least one of the antifogging properties and the film manufacturability.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A modifier for polyolefin-based resin, comprising:

   a compound (A) represented by Formula (1) below; and
   a compound (B) represented by Formula (2) below;

   [Compound (A)]

   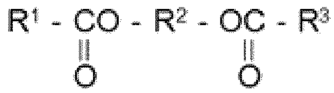

   Formula (1)

   wherein $R^1$ and $R^3$ are each a hydrocarbon group having 5 to 21 carbon atoms; and $R^2$ is a residue with all hydroxy groups removed from (poly)oxyalkylene glycol having 2 to 100 carbon atoms and having, in a molecule thereof, a (poly)oxyalkylene group composed of oxyalkylene units having 2 to 4 carbon atoms, and

   [Compound (B)]

   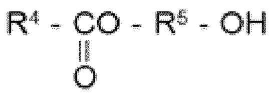

   Formula (2)

   wherein $R^4$ is a hydrocarbon group having 5 to 21 carbon atoms; and $R^5$ is a residue with all hydroxy groups removed from (poly)oxyalkylene glycol having 2 to 100 carbon atoms and having, in a molecule thereof, a (poly)oxyalkylene group composed of oxyalkylene units having 2 to 4 carbon atoms.

2. The modifier for polyolefin-based resin according to claim 1, wherein
   $R^1$, $R^3$, and $R^4$ are each a hydrocarbon group having 7 to 17 carbon atoms.

3. The modifier for polyolefin-based resin according to claim 1, wherein
   $R^2$ and $R^5$ are each a residue with all hydroxy groups removed from polyoxyalkylene glycol having 4 to 50 carbon atoms and having, in a molecule thereof, a polyoxyalkylene group including oxyalkylene units having 2 carbon atoms.

4. The modifier for polyolefin-based resin according to claim 1, wherein the compound (A) is contained in an amount of 20 to 80 parts by mass, and the compound (B) is contained in an amount of 20 to 80 parts by mass when a total mass of the compound (A) and the compound (B) is 100 parts by mass.

5. The modifier for polyolefin-based resin according to claim 1, further comprising a nonionic surfactant (C).

6. The modifier for polyolefin-based resin according to claim 5, wherein

the nonionic surfactant (C) is a partial ester of a trivalent to hexavalent polyol and an aliphatic carboxylic acid having 6 to 22 carbon atoms.

**7.** The modifier for polyolefin-based resin according to claim 5, wherein the nonionic surfactant (C) is contained in an amount of 20 to 400 parts by mass when a total mass of the compound (A) and the compound (B) is 100 parts by mass.

**8.** A polyolefin-based resin composition comprising:

a polyolefin-based resin and;
the modifier for polyolefin-based resin according to any one of claims 1 to 7.

**9.** A polyolefin-based resin film comprising the polyolefin-based resin composition according to claim 8.

**10.** A laminate film comprising two or more laminated layers, wherein
at least one outermost layer of the two or more laminated layers includes the polyolefin-based resin film according to claim 9.

Europäisches Patentamt
European Patent Office
Office européen des brevets

# EUROPEAN SEARCH REPORT

Application Number
EP 24 18 4370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 24 46 319 A1 (NIPPON LIGHT METAL RES LABOR; TOHO CHEM IND CO LTD) 7 May 1975 (1975-05-07) * abstract; claim 1 * ----- | 1-4 | INV. C08K5/103 C08L23/00 C08L23/02 C08L23/06 C08L23/08 B32B27/18 B32B27/32 |
| Y | JP 2007 045855 A (ASAHI KASEI LIFE & LIVING CORP) 22 February 2007 (2007-02-22) * abstract; claim 1 * * paragraphs [0017], [0019], [0042] * ----- | 1-10 | |
| Y | US 3 048 266 A (HACKHEL ROBERT H ET AL) 7 August 1962 (1962-08-07) * abstract; claim 1; table II * ----- | 1-10 | |
| X | JP H11 343383 A (ASAHI CHEMICAL IND) 14 December 1999 (1999-12-14) * abstract; claim 1 * * paragraphs [0022], [0023], [0057] * ----- | 1-4 | |
| | | | TECHNICAL FIELDS SEARCHED (IPC) |
| | | | C08K B32B C08L |

The present search report has been drawn up for all claims

2

| Place of search | Date of completion of the search | Examiner |
|---|---|---|
| Munich | 28 October 2024 | Schütte, Maya |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 18 4370

This annex lists the patent family members relating to the patent documents cited in the above-mentioned European search report. The members are as contained in the European Patent Office EDP file on
The European Patent Office is in no way liable for these particulars which are merely given for the purpose of information.

28-10-2024

| Patent document cited in search report | | Publication date | Patent family member(s) | | | Publication date |
|---|---|---|---|---|---|---|
| DE 2446319 | A1 | 07-05-1975 | DE | 2446319 | A1 | 07-05-1975 |
| | | | GB | 1486197 | A | 21-09-1977 |
| | | | US | 3945930 | A | 23-03-1976 |
| JP 2007045855 | A | 22-02-2007 | NONE | | | |
| US 3048266 | A | 07-08-1962 | BE | 615683 | A | 28-10-2024 |
| | | | DE | 1494382 | A1 | 12-03-1970 |
| | | | GB | 941796 | A | 13-11-1963 |
| | | | US | 3048266 | A | 07-08-1962 |
| JP H11343383 | A | 14-12-1999 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007045855 A
- JP 2002020555 A